# EUROPÄISCHE PATENTSCHRIFT

(11) **EP 2 000 193 B1**
(45) Veröffentlichungstag und Bekanntmachung des Hinweises auf die Patenterteilung: **11.01.2012**
(21) Anmeldenummer: 08157255.4
(22) Anmeldetag: 30.05.2008
(51) Int. Cl.: B01D 35/147, B01D 35/153, F16K 17/00

(54) **Ölfilter mit mindestens einem Ventil**
Oil filter with at least one valve
Filtre à huile doté d'au moins une soupape

(30) Priorität: 01.06.2007 DE 202007007859 U
(43) Veröffentlichungstag der Anmeldung: 10.12.2008
(73) Patentinhaber: MANN+HUMMEL GmbH, 71638 Ludwigsburg (DE)
(72) Erfinder: Petschl, Thomas, 71638, Ludwigsburg (DE); Ritter, Dr. Steffen, 70327 Stuttgart (DE); Thienel, Michael, 95359, Kasendorf (DE); Münkel, Karlheinz, 75038 Oberderdingen-Flehingen (DE)

(56) Entgegenhaltungen:
- EP-A- 1 389 486
- EP-A- 1 524 021
- WO-A-01/17661
- DE-A1- 10 040 398
- DE-U1-202005 007 870

## Beschreibung

### Technisches Gebiet

Die Erfindung betrifft einen Ölfilter mit mindestens einem Ventil der im Oberbegriff des Anspruchs 1 angegebenen Gattung.

### Stand der Technik

Zur Reinigung des Schmieröls von Brennkraftmaschinen werden Ölfilter eingesetzt, die die festen Fremdstoffe aus dem Motoröl wie Verbrennungsrückstände, Metallabrieb und Staub entfernen. Derartige Ölfilter werden zumindest mit einem Bypassventil ausgestattet, das bei verstopftem Filter die Ölversorgung des Motors sichert. Diese Ventile bzw. deren Bestandteile sind in der Regel aus Metall, was insbesondere auf die Rückstellfeder zutrifft. Konstruktionen aus nichtmetallischen Werkstoffen sind jedoch sehr aufwändig und benötigen einen großen Bauraum insbesondere dann, wenn ein höherer Kraftbedarf oder ein größerer Ventilhub erforderlich sind.
Aus der EP 1 524 021 A1 ist ein Flüssigkeitsfilter mit einer Dichtungseinheit aus einem Entlüftungsventil und Rückschlagventil bekannt, wobei die Dichtwirkung des Rückschlagventils durch ein Federelement unterstützt wird. Dieses Federelement ist als im Wesentlichen konisch, elliptisch oder eiförmig offenbart und bringt eine radial ausgerichtete Kraft auf die Dichtung auf. Die Dichtung dichtet dabei Öffnungen im Mittelrohr radial am Innendurchmesser ab.

Der Erfindung liegt daher die Aufgabe zugrunde, ein Ventil in einem Ölfilter derart zu gestalten, dass es aus nichtmetallischen Werkstoffen besteht, wobei auch hohe Rückstellkräfte und große Ventilhübe realisierbar sind.

Diese Aufgabe wird durch einen Ölfilter mit den Merkmalen des Anspruchs 1 gelöst.

### Offenbarung der Erfindung

Durch die Erfindung ist ein metallfreies Ventil in einem Ölfilter geschaffen, das einen geringen Bauraum benötigt und billig in der Herstellung ist. Durch eine entsprechende Wahl der Geometrie des Federelementes und des Materials, nämlich des Faserverbundwerkstoffs, lässt sich die Federkennlinie in einem großen Bereich beeinflussen.

Erfindungsgemäß ist das Federelement ein aus einer Platte gestanztes Bauelement. Solche Platten sind aus Kunststoff gefertigte Halbzeuge, die beim Extrudieren durch Endlosfasern verstärkt werden. Der Thermoplast ist vorzugsweise ein Polyamid, und die Fasern sind vorzugsweise Glas oder Kohlefasern.

Gemäß einer bevorzugten Ausgestaltung umfasst das Federelement mehrere, im Wesentlichen in einer gemeinsamen Ebene verlaufende Federarme. Diese Federarme verlaufen zweckmäßigerweise in radialer Richtung, wobei diese Federarme mit einem ihrer Enden an einem Ring gehalten sind und das jeweils freie Ende auf das Ventilschließglied wirkt. Dadurch, dass die Federarme mit dem Ring einstückig ausgeführt sind, ist die Herstellung und Montage des Ventils sehr einfach.

Damit bei allen Federarmen die Federarmlänge bezüglich ihrer Krafteinleitung auf das Ventilschließglied genau definiert ist, wird vorgeschlagen, dass die Federarme nahe ihrer freien Enden mit einer gegen das Ventilschließglied gerichteten Wölbung versehen sind. Eine solche Wölbung definiert exakt den Krafteinleitungspunkt auf das Ventilschließglied, so dass dessen Abstand vom Ring des Federelementes präzise vorgegeben ist. Gemäß einer Ausgestaltung des Federelementes erstrecken sich die Federarme vom Ring aus radial nach innen und der äußere Rand des Ringes ist an einem Halteelement befestigt. Alternativ dazu ist es auch möglich, dass sich die Federarme vom Ring aus radial nach außen erstrecken und der innere Rand des Ringes an einem Halteelement befestigt ist.

Erfindungsgemäß ist das Ventilschließglied als ringförmiger Ventilteller aus einem elastischen Werkstoff gestaltet. Ein solcher Ventilteller kann beispielweise aus einem gummiartigen Flachmaterial ausgestanzt sein. Es ist darüber hinaus zweckmäßig, dass das Halteelement einen hülsenförmigen Abschnitt aufweist, der zur definierten Aufnahme des Ventils in einem Anschlussbereich des Ölfilters dient. Alternativ hierzu kann das Halteelement einen mantelförmigen Abschnitt aufweisen, der zur Aufnahme des Ventils in dem Anschlussbereich des Ölfilters dient. Je nach Bedarf kann das Ventil als Umgehungs- oder Rücklaufventil eingesetzt werden.

### Kurze Beschreibung der Zeichnungen

Ausführungsbeispiele der Erfindung sind nachslehend anhand der Zeichnung näher erläutert. In der Zeichnung zeigt:

Fig. 1 eine Prinzipdarstellung des Ventils im Schnitt,

Fig. 2 einen Längsschnitt durch einen Abschnitt eines Ölfilters,

Fig. 3 in perspektivischer Darstellung eine Ausführungsform des Federelementes und dessen Haltelement als Einzelteile,

Fig. 4 eine perspektivische Darstellung einer Hälfte des Ventils mit den Teilen aus Fig. 3,

Fig. 5 in perspektivischer Darstellung eine weitere Ausführung eines Federelementes und dessen Halteelement als Einzelteile,

Fig. 6 die Hälfte des Ventils bestehend aus den Teilen gemäß Fig. 5,

Fig. 7 in perspektivischer Darstellung eine weitere Ausführungsform des Ventils.

### Ausführungsform(en) der Erfindung

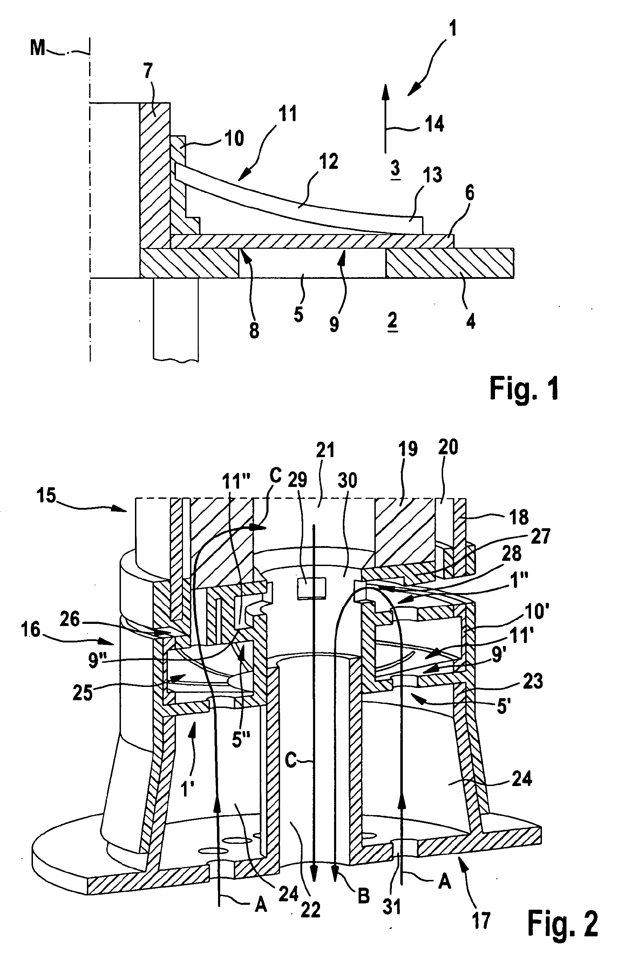

Die Fig. 1 zeigt eine Prinzipdarstellung eines Ventils 1, wobei aus Gründen der rotationssymmetrischen Ausgestaltung lediglich der auf einer Seite einer Mittelachse M liegende Teil dargestellt ist. Eine untere, vom Öl durchflossene Kammer 2 ist von einer darüber befindlichen Kammer 3 durch einen Plattenkörper 4 getrennt, in dem eine Durchtrittsöffnung 5 angeordnet ist. Auf dem Plattenkörper 4 liegt eine Dichtung 6 aus einem leicht verformbaren, vorzugsweise elastischen Material, die die Form einer Ringscheibe aufweist und mit ihrem inneren Umfangsrand auf einem hülsenförmigen Tragteil 7 positioniert ist. Die Dichtung 6 hat in radialer Richtung eine solche Erstreckung, dass die Durchtrittsöffnung 5 vollständig überdeckt wird und somit der obere Rand der Durchtrittsöffnung 5 einen Ventilsitz 8 für die als Ventilschließglied 9 wirkende Dichtung 6 bildet.

An dem Tragteil 7 ist ein Halteelement 10 befestigt, das das radial innere Ende eines Federelementes 11 aufnimmt. Das Federelement 11 umfasst mehrere in radialer Richtung verlaufende Federarme 12, deren freie Enden 13 an der Dichtung 6 anliegen und diese gegen den Plattenkörper 4 mit einer bestimmten Kraft beaufschlagen. In der Fig. 1 ist das Ventil 1 in seiner Schließstellung dargestellt, und mit dem Pfeil 14 ist die Öffnungsrichtung angegeben. Bei Erreichen eines vorgegebenen Öldrucks in der Kammer 2 wird die Kraft des Federelementes 11 überwunden und das Ventilschließglied 9 von dem Ventilsitz 8 abgehoben, so dass der Durchtritt des Öls in die Kammer 3 erfolgt. Bei nachlassendem Druck in der Kammer 2 bewirkt das Federelement 11 eine Rückstellung der Dichtung 6, so dass durch Anlegen dieser an den Plattenkörper 4 die Durchtrittsöffnung 5 verschlossen wird.

In Fig. 2 ist der Längsschnitt durch den unteren Abschnitt eines Ölfilters 15 gezeigt, das heißt, der Schnitt durch den Anschlussbereich 16 des Ölfilters montiert auf einem Anschlussstutzen 17. Der Ölfilter 15 besteht im Wesentlichen aus einem Gehäuse 18 mit einem darin angeordneten Filterelement 19. Zwischen dem Gehäuse 18 und dem Filterelement ist ein Ringraum 20 gebildet, von dem aus das zu filternde Öl durch das Filterelement 19 in einen zentrischen Raum 21 tritt. Dieser Raum 21 ist mit einem zentrischen Rohr 22 im Anschlussstutzen 17 verbunden. Im Anschlussbereich 16 ist unmittelbar über dem Anschlussstutzen 17 eine radiale Zwischenwand 23 angeordnet, auf deren dem Filterelement zugewandten Seite ein aus einer Dichtung bestehendes Ventilschließglied 9' liegt, das Durchtrittsöffnungen 5' in der Zwischenwand 23 überdeckt und mittels eines Federelementes 11' gegen die Zwischenwand 23 belastet ist.

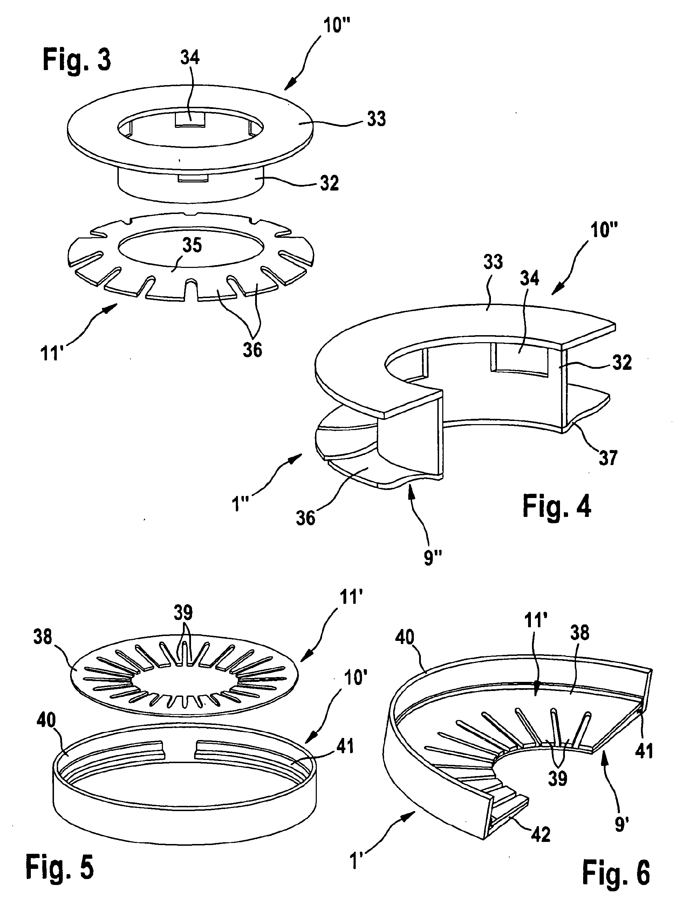

Das Ventilschließglied 9' und das Federelement 11' sind mittels eines Halteelementes 10' in dem Anschlussbereich 16 befestigt. Die verschließbaren Öffnungen 5' und das Ventilschließglied 9' bilden auf die gleiche Weise ein Ventil 1', wie es zu Fig. 1 beschrieben ist, auch wenn die geometrische Gestaltung unterschiedlich ist. Hierauf wird später zu Fig. 5 und 6 noch näher eingegangen. Unterhalb der Zwischenwand 23 befindet sich konzentrisch zum Rohr 22 eine Eintrittskammer 24 für das zu filternde Öl. Oberhalb des Federelementes 11' ist eine weitere Kammer 25 gebildet, die wiederum durch eine weitere radiale Wand 26 begrenzt wird. In der Wand 26 befinden sich Kanäle 27, die die Kammer 25 mit dem Ringraum 20 verbinden, sowie ein Raum 28, der über radiale Öffnungen 29 mit einem Verbindungskanal 30 zwischen dem zentrischen Raum 21 und dem Rohr 22 fluidisch verbunden ist. Zwischen der Kammer 25 und dem Raum 28 ist ein weiteres Ventil 1" vorgesehen, das aus mehreren Öffnungen 5", einem diese abdeckenden Ventilschließglied 9" und einem Federelement 11" gebildet ist. Einzelheiten zu dem Ventil 1" ergeben sich nachfolgend zu Fig. 3 und 4.

Das Öl strömt von der Rohseite durch Öffnungen 31 gemäß den Strömungspfeilen A in die Eintrittskammer 24. Da die Schließkraft des Federelementes 11' gering ist, reicht bereits ein niedriger Druck aus, um das Ventil zu öffnen, so dass das Öl in die Kammer 25 gelangt und von dort durch die Kanäle 27 in den Ringraum 20. Es ergibt sich somit eine Strömung gemäß Pfeilen C durch das Filterelement 19 in den zentrischen Raum 21 und von dort durch das Rohr 22 zur Reinseite. Ist keine Strömung vorhanden, beispielsweise bei Stillstand der Ölpumpe, so schließt das Ventil 1' und verhindert auf diese Weise den Rücklauf des Öls aus dem Filter 15 zur Rohseite hin.

Sofern der Druckabfall im Filter 1 einen bestimmten Wert überschreitet, beispielsweise bei verschmutztem Filterelement, wird die Druckdifferenz zwischen der Eintrittskammer 24 und dem Verbindungskanal 30, der das Druckniveau der Reinseite hat, so groß, dass die Federkraft des Federelementes 11" überwunden wird und das Ventil 1" öffnet. Dadurch ist eine Bypassströmung gemäß Pfeil B durch das geöffnete Ventil 1" und die Radialöffnungen 29 möglich, die sicherstellt, dass der Ölfluss bei Betrieb der Ölpumpe nicht unterbunden wird, auch wenn keine ausreichende Durchströmung des Filterelementes 19 gegeben ist.

In Fig. 3 ist das Federelement 11" aus Fig. 2 gezeigt und ein Halteelement 10", an dem das Federelement 11" zu befestigen ist. Das Halteelement 10" weist einen hülsenförmigen Abschnitt 32 auf, an dessen oberem Rand sich ein scheibenförmiger Abschnitt 33 anschließt. In dem hülsenförmigen Abschnitt 32 befinden sich Radialöffnungen 34, die mit den Radialöffnungen 29 der Fig. 2 deckungsgleich sind. Das Federelement 11" umfasst einen inneren Ring 35 und eine Vielzahl von radial nach außen verlaufenden Federarmen 36, die gleichmäßig über den Umfang des Ringes 35 verteilt angeordnet und einstückig mit diesem ausgeführt sind. Das Federelement 11" besteht aus einem mit kontinuierlich hergestellten Fasern verstärkten Thermoplasten.

Die Fig. 4 zeigt eine perspektivische Darstellung einer Hälfte des Ventils 1", bei dem das Federelement 11" an dem Halteelement 10" befestigt ist und ebenso eine als Ventilschließglied 9" dienende Dichtung 37. Der Innendurchmesser des Ringes 35 ist so bemessen, dass er bezogen auf den hülsenförmigen Abschnitt 32 ein Untermaß aufweist, so dass das Federelement 11" kraftschlüssig an dem Halteelement 10" befestigt ist. Alternativ hierzu ist es jedoch auch möglich, den inneren Rand des Federelementes 11" beim Spritzgießen des Haltelements 10" durch Umgießen des Randes formschlüssig einzubetten.

In Fig. 5 sind das Federelement 11' sowie das Halteelement 10' aus Fig. 2 gezeigt, und zwar als Einzelteile vor der Montage. Das Federelement 11' umfasst einen äußeren Ring 38 sowie eine Vielzahl radial nach innen gerichteter Federarme 39, die gleichmäßig verteilt über den Umfang des Ringes 38 angeordnet und einstückig mit diesem ausgeführt sind. Das Material des Federelements 11' ist vorzugsweise das Gleiche wie bei dem Federelement 11" in Fig. 3. Das Halteelement 10' umfasst einen mantelförmigen Abschnitt 40, an dessen unterem Rand ein radial nach innen gerichteter Flansch 41 angeformt ist.

Die Fig. 6 zeigt eine perspektivische Darstellung einer Hälfte des Ventils 1', bei dem das Filterelement 11' an dem Halteelement 10' form- oder kraftschlüssig befestigt ist. Zur kraftschlüssigen Befestigung wird das Federelement 10' in einem ein Untermaß gegenüber dem Außenumfang des Ringes 38 aufweisenden Bereich des Haltelementes 10' aufgenommen; zur formschlüssigen Befestigung kommen sowohl Rastelemente als auch ein Einbetten des äußeren Randes des Ringes 38 in das Material des Halteelementes 10' in Betracht. Wie aus Fig. 6 weiter zu ersehen ist, befindet sich unterhalb des Federelementes 11' eine als Ventilschließglied 9' dienende Dichtung 42, die mit ihrem äußeren Umfangsrand an der Unterseite des Halteelementes 10' befestigt ist.

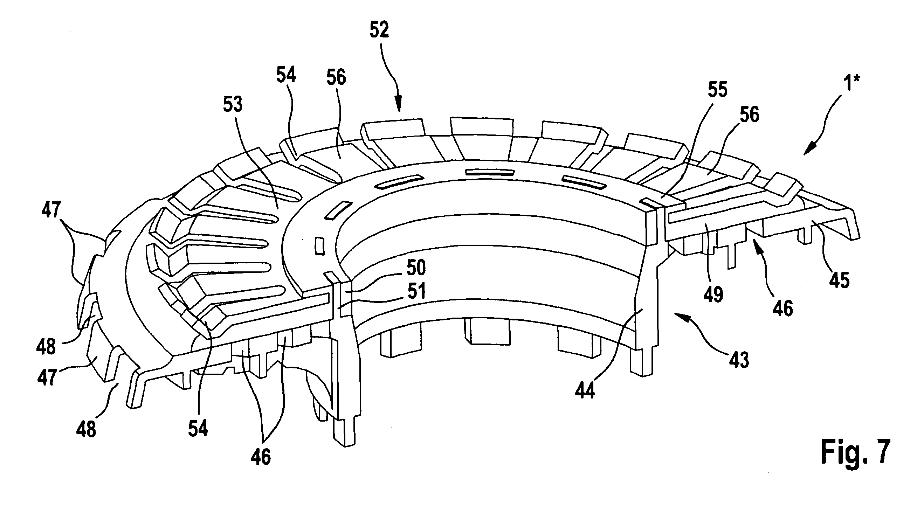

Die Fig. 7 zeigt eine weitere Ausführungsform eines Ventils 1*, das in einem Anschlussbereich eines Ölfilters einsetzbar ist. Das Ventil 1* umfasst einen Träger 43, der einen hülsenförmigen Abschnitt 44 und einen dazu orthogonal angeordneten Plattenkörper 45 aufweist. In dem Plattenkörper 45 ist eine Vielzahl von Durchgangsöffnungen 46 vorgesehen, und am äußeren Rand des Plattenkörpers 45 befinden sich abgewinkelte Vorsprünge 47, zwischen denen Öffnungen 48 gebildet sind.

Auf dem Plattenkörper 45 liegt eine Dichtung 49, die alle Durchgangsöffnungen 46 abdeckt und bei entsprechender Druckkraft auf der in Fig. 7 unteren Seite des Plattenkörpers 45 nach oben abgehoben wird und somit als Ventil 1* wirkt. Am inneren Rand weist die Dichtung 49 einen Ringwulst 55 mit Aussparungen 50 auf, deren Anordnung einer entsprechenden Anordnung von zinnenförmigen Vorsprüngen 51 in axialer Richtung angepasst ist, um auf diese Weise eine Befestigung der Dichtung 49 an dem Träger 43 zu erreichen.

Auf der Dichtung 49 befindet sich ein Federelement 52, das einen inneren Ring 53 und eine Vielzahl radialer Federarme 56 umfasst. Die Federarme 56 weisen nahe ihrer freien Enden Wölbungen 54 auf, die gegen die Dichtung 49 gerichtet sind und die mit der Dichtung in Wechselwirkung stehen. Die Federarme 56 bewirken die Rückstellung der Dichtung 49 in die Schließstellung und definieren die Druckkraft, bei der das Ventil 1* geöffnet wird. Der Ring 53 ist mit seinem inneren Rand in einer Ringnut des Ringwulstes 55 gehalten und somit fixiert. Die Funktion des Ventils 1* entspricht derjenigen, die zu Fig. 1 und dem Ventil 1' in Fig. 2 beschrieben ist.

## Patentansprüche

1. Ölfilter mit mindestens einem Ventil (1, 1', 1", 1*), das einen Ventilsitz (8) und ein von einem Federelement (11, 11', 11", 52) gegen den Ventilsitz (8) beaufschlagtes Ventilschließglied (9, 9', 9", 49) umfasst, wobei das Ventilschließglied bei Überschreiten eines vorgegebenen Öldrucks in Öffnungsrichtung (14) vom Ventilsitz (8) abhebbar ist, **dadurch gekennzeichnet, dass** das Federelement (11, 11', 11", 52) aus einem Verbundwerkstoff besteht, und zwar aus einem Thermoplasten, der mit kontinuierlich hergestellten Fasern verstärkt ist, wobei das Federelement (11, 11', 11", 52) ein aus einer Platte gestanztes Bauelement ist, wobei das Ventilschließglied (9, 9', 9", 49) als ringförmiger Ventilteller aus einem elastischen Werkstoff gestaltet ist.

2. Ölfilter nach Anspruch 1, **dadurch gekennzeichnet, dass** der Thermoplast ein Polyamid ist und die Fasern Glas oder Kohlefasern sind.

3. Ölfilter nach einem der Ansprüche 1 oder 2, **dadurch gekennzeichnet, dass** das Federelement (11, 11', 11", 52) mehrere im Wesentlichen in einer gemeinsamen Ebene verlaufende Federarme (12, 36, 39, 56) umfasst.

4. Ölfilter nach Anspruch 3, **dadurch gekennzeichnet, dass** die Federarme (12, 36, 39, 56) in radialer Richtung verlaufen.

5. Ölfilter nach Anspruch 4, **dadurch gekennzeichnet, dass** die Federarme (36, 39, 56) mit einem ihrer Enden an einem Ring (35, 38, 53) gehalten sind, und das jeweils freie Ende auf das Ventilschließglied (9', 9", 49) wirkt.

6. Ölfilter nach Anspruch 5, **dadurch gekennzeichnet, dass** die Federarme (56) nahe ihrer freien Enden mit einer gegen das Ventilschließglied (49) gerichteten Wölbung (54) versehen sind.

7. Ölfilter nach Anspruch 5 oder 6, **dadurch gekennzeichnet, dass** sich die Federarme (39) vom Ring (38) aus radial nach innen erstrecken und der äußere Rand des Ringes (38) an einem Halteelement (10') befestigt ist.

8. Ölfilter nach einem der Ansprüche 5 oder 6, **dadurch gekennzeichnet, dass** sich die Federarme (36) vom Ring (35) aus radial nach außen erstrecken und der innere Rand des Ringes an einem Halteelement (10") befestigt ist.

9. Ölfilter nach Anspruch 7, **dadurch gekennzeichnet, dass** das Halteelement (10") einen hülsenförmigen Abschnitt (32) aufweist, der zur definierten Aufnahme des Ventils (1") in einem Anschlussbereich (16) des Ölfilters (15) dient.

10. Ölfilter nach Anspruch 8, **dadurch gekennzeichnet, dass** das Halteelement (10') einen mantelförmigen Abschnitt (40) aufweist, der zur Aufnahme des Ventils (1') in dem Anschlussbereich (16) des Ölfilters (15) dient.

11. Ölfilter nach einem der Ansprüche 1 bis 10, **dadurch gekennzeichnet, dass** das Ventil (1') als Rücklaufsperrventil vorgesehen ist.

12. Ölfilter nach einem der Ansprüche 1 bis 10, **dadurch gekennzeichnet, dass** das Ventil (1") als Bypassventil vorgesehen ist.

## Claims

1. Oil filter with at least one valve (1, 1', 1", 1*) which comprises a valve seat (8) and a valve closing component (9, 9', 9", 49) pressed against the valve seat (8) by a spring element (11, 11', 11", 52), the valve closing component being able to be raised in opening direction (14) from the valve seat (8) when exceeding a predefined oil pressure, **characterized in that** the spring element (11, 11', 11", 52) consists of a composite material, namely of a thermoplast which is reinforced by continuously manufactured fibers, the spring element (11, 11', 11 ", 52) being a component cut from a plate, the valve closing component (9, 9', 9", 49) being designed as annular valve disk made of an elastic material.

2. Oil filter according to claim 1, **characterized in that** the thermoplast is a polyamide and that the fibers are glass or carbon fibers.

3. Oil filter according to one of the claims 1 or 2, **characterized in that** the spring element (11, 11', 11", 52) comprises substantially several spring arms (12, 36, 39, 56) extending on a common plane.

4. Oil filter according to claim 3, **characterized in that** the spring arms (12, 36, 39, 56) extend in radial direction.

5. Oil filter according to claim 4, **characterized in that** the spring arms (36, 39, 56) are held with one of their ends on a ring (35, 38, 53) and that each free end acts on the valve closing component (9', 9", 49).

6. Oil filter according to claim 5, **characterized in that** the spring arms (56) have near their free ends a curvature (54) directed towards the valve closing component (49).

7. Oil filter according to claim 5 or 6, **characterized in that** the spring arms (39) extend radially inwards from the ring (38) and that the external edge of the ring (38) is attached to a retaining element (10').

8. Oil filter according to one of the claims 5 or 6, **characterized in that** the spring arms (36) extend radially outwards from the ring (35) and that the internal edge of the ring is attached to a retaining element (10").

9. Oil filter according to claim 7, **characterized in that** the retaining element (10") features a sleeve-shaped section (32) which serves as a defined support for the valve (1") in a connecting area (16) of the oil filter (15).

10. Oil filter according to claim 8, **characterized in that** the retaining element (10') features a jacket-shaped section (40) which serves as a defined support for the valve (1') in the connecting area (16) of the oil filter (15).

11. Oil filter according to one of the claims 1 to 10, **characterized in that** the valve (1') is designed as return check valve.

12. Oil filter according to one of the claims 1 to 10, **characterized in that** the valve (1") is designed as bypass valve.

## Revendications

1. Filtre à huile avec au moins une soupape (1, 1', 1", 1*) qui comprend un siège de soupape (8) et un organe de fermeture de soupape (9, 9', 9", 49) actionné par un élément de ressort (11, 11', 11 ", 52) contre le siège de soupape (8), l'organe de fermeture de soupape pouvant être soulevé dans le sens d'ouverture (14) du siège de soupape (8) en cas de dépassement d'une pression d'huile prédéfinie, **caractérisé en ce que** l'élément de ressort (11, 11', 11 ", 52) est constitué d'un matériau composite, à savoir d'un thermoplastique, qui est renforcé par des fibres fabriquées en continu, l'élément de ressort (11, 11', 11 ", 52) étant un composant découpé dans une plaque, l'organe de fermeture de soupape (9, 9', 9", 49) étant exécuté en tant que tête de soupape annulaire réalisée dans un matériau élastique.

2. Filtre à huile selon la revendication 1, **caractérisé en ce que** le thermoplastique est un polyamide et que les fibres sont des fibres de verre ou de carbone.

3. Filtre à huile selon l'une des revendications 1 ou 2, **caractérisé en ce que** l'élément de ressort (11, 11', 11", 52) comprend plusieurs bras-ressorts (12, 36, 39, 56) évoluant essentiellement sur un plan commun.

4. Filtre à huile selon la revendication 3, **caractérisé en ce que** les bras-ressorts (12, 36, 39, 56) évoluent en sens radial.

5. Filtre à huile selon la revendication 4, **caractérisé en ce que** les bras-ressorts (36, 39, 56) sont maintenus, à l'une de leurs extrémités, sur une bague (35, 38, 53) et que chaque l'extrémité libre agit sur l'organe de fermeture de soupape (9, 9', 9", 49).

6. Filtre à huile selon la revendication 5, **caractérisé en ce que** les bras-ressorts (56) sont pourvus, à proximité de leurs extrémités libres, d'une cambrure (54) dirigée contre l'organe de fermeture de soupape (49).

7. Filtre à huile selon la revendication 5 ou 6, **caractérisé en ce que** les bras-ressorts (39) s'étendent, à partir de la bague (38), en sens radial vers l'intérieur et que le bord extérieur de la bague (38) est fixé à un élément de maintien (10').

8. Filtre à huile selon l'une des revendications 5 ou 6, **caractérisé en ce que** les bras-ressorts (36) s'étendent, à partir de la bague (35), en sens radial vers l'extérieur et que le bord intérieur de la bague est fixé à un élément de maintien (10").

9. Filtre à huile selon la revendication 7, **caractérisé en ce que** l'élément de maintien (10") présente une section (32) en forme de douille qui sert au logement défini de la soupape (1") dans une zone de raccordement (16) du filtre à huile (15).

10. Filtre à huile selon la revendication 8, **caractérisé en ce que** l'élément de maintien (10') présente une section (40) en forme d'enveloppe qui sert au logement de la soupape (1') dans la zone de raccordement (16) du filtre à huile (15).

11. Filtre à huile selon l'une des revendications 1 à 10, **caractérisé en ce que** la soupape (1') est prévue en tant que soupape anti-retour.

12. Filtre à huile selon l'une des revendications 1 à 10, **caractérisé en ce que** la soupape (1 ") est prévue en tant que soupape de dérivation.
